# EUROPEAN PATENT SPECIFICATION

(11) **EP 0 887 524 B1**
(45) Date of publication and mention of the grant of the patent: **11.08.2004**
(21) Application number: 98202009.1
(22) Date of filing: 16.06.1998
(51) Int. Cl.: F01P 11/12, F01P 1/06, A62C 3/07, B60K 11/00

(54) **Fire protected agricultural machine**
Feuerschutzeinrichtung für eine landwirtschaftliche Maschine
Machine agricole avec protection incendie

(30) Priority: 26.06.1997 GB 9713419
(43) Date of publication of application: 30.12.1998
(73) Proprietor: CNH Belgium N.V., 8210 Zedelgem (BE)
(72) Inventor: Demonie, Lode A., 8840 Staden (BE); Verbeke, Frank P., 8210 Zedelgem (BE); Van Acker, Eric M., 8820 Torhout (BE); Vergote, Geert R.J., 8870 Izegem (BE)
(74) Representative: Vandenbroucke, Alberic

(56) References cited:
- EP-A- 0 443 210
- GB-A- 1 524 580
- US-A- 4 539 943
- PATENT ABSTRACTS OF JAPAN vol. 1997, no. 09, 30 September 1997 (1997-09-30) & JP 09 112662 A (TOYOTA MOTOR CORP), 2 May 1997 (1997-05-02)

## Description

The present invention generally is directed to a power driven agricultural machine which is used in surroundings which are contaminated with inflammable debris. More specifically, the present invention is particularly useful on combine harvesters which, by their nature, very often are used in an atmosphere which is loaded with inflammable debris such as chaff, straw particles, dust etc. Indeed, combine harvesting preferably is done when the crop to be harvested is both ripe and very dry. Present day combine harvesters use powerful internal combustion engines which may have horsepower ratings of up to 300 hp or more and, as is generally known, such engines generate a lot of heat up to the extent that any inflammable debris, which falls onto hot engine parts or even comes near such parts, is scorched or parched and even may catch fire. This represents a serious fire hazard in that such scorched debris may fall onto the stubble or crop standing on the field with the accompanying risk that this crop field may catch fire. Alternatively such scorched debris also may drop onto inflammable dirt accumulated on certain parts of the machine. This may light fire first to this accumulated dirt and subsequently to the machine itself. In the worst case, such a machine fire also may spread to the crop field.

It often has been experienced that, in use of a combine harvester, chaff, straw particles and other debris indeed tend to accumulate at certain spots on the machine and this is particularly hazardous when these spots are situated in the vicinity of the engine for reasons already explained herebefore. This risky situation may exist on combine harvesters having an engine service platform which is surrounded by shieldings in as much as this forms an open top, boxlike structure in which inflammable debris may accumulate in great quantities. Moreover, on such combine harvesters, chaff, straw particles and other debris also tend to accumulate on certain parts of the engine.

It therefore is the objective of the present invention to provide a simple and effective configuration for obviating or, at least, reducing to the greatest possible extent the fire hazards accompanying power driven machines operating in an environment which is contaminated with inflammable debris such as chaff, straw particles etc.

It is already known in the art to use air jets for removing debris from critical parts on or near the engine. For instance, GB-A-1 524 580 discloses stationary air nozzles and deflectors directed to the cylinders of an engine. The air jets clean the cylinder surface when the engine is switched off. As each air jet hits only a limited surface of the engine, a large number of nozzles will be required. The same document also provides for a movable air pipe, which is guided along vertical guide rails for cleaning the radiator of a water-cooled engine. The air pipe comprises obliquely pointing air nozzles, which push the pipe upward during the cleaning action. Such system is not very dependable as a small contamination of one of the guide rails suffices to block this air-driven system, resulting in a further accumulation of debris on top of the guide rollers and a complete halt of the air pipe at one level. So there still exists a need for a reliable and efficient system that prevents accumulation of inflammable material on or near an engine.

According to the present invention, a power driven agricultural machine is provided for use in surroundings contaminated with inflammable debris (e.g. chaff, straw particles, dust, etc.); the machine comprising an internal combustion engine for providing motive power to the machine and/or energizing machine parts thereof and air blast means connected to a source of pressurized air and provided with at least one nozzle for directing at least one air jet at or across at least one critical engine part and/or machine part adjacent the engine; said air blast means being mounted for angular movement.

Preferably, the air blast means comprise tubing means provided with multiple nozzles or air outlets at selective positions for directing air jets to several critical parts. The tubing means are mounted for oscillatory movement so that the air jets issuing from the nozzles during operation, cover larger areas of the critical parts.

In one embodiment, the tubing means are bent and the pivot axis thereof is positioned so that these tubing means closely circumscribe said critical engine parts while oscillating. The tubing means also may comprise one or more branches so as to position the air blasts even closer to the critical engine parts. Alternatively, the tubing means also may be straight.

Preferably, the tubings are intermittently pressurized and oscillated so as to generate short air blasts which 'wipe' the larger areas of the critical parts.

In the preferred embodiment, the radiator is provided at the pressure side of the fan and the engine is disposed at the side of the radiator facing away from the fan; the arrangement being such that the fan draws cooling air in from the surrounding atmosphere and urges this air past the fan, through the radiator and subsequently along and past the engine. The engine may be encased in a funnel shaped structure facing, at one end, to the radiator and having, at the opposite end, an outlet opening which is positioned in the vicinity of the engine power take off.

This invention advantageously is applicable on combine harvesters which have an engine and an engine service platform upon which inflammable debris tends to accumulate if no precautionary measures are taken.

The approach made by the present invention thus involves the use of forceful air jets which are directed at intervals onto particularly critical parts of the engine. These air jets are angularly movable so as to 'wipe' across larger parts of the critical engine areas. These air jets prevent fine dust particles from settling on the hot engine parts. Any dirt particles adhering to the engine parts are blown off and made airborne. Such airborne particles are removed from the engine area by the used cooling air from the radiator and which is directed to forcefully flow along the engine.

This used cooling air from the radiator additionally also contributes in preventing, to a major extent, that, on the one hand, inflammable debris can come anywhere near hot engine parts, and, on the other hand, inflammable debris can accumulate on machine parts in the vicinity of the engine.

A combine harvester in accordance with the present invention will now be described in greater detail with reference to the accompanying drawings wherein :

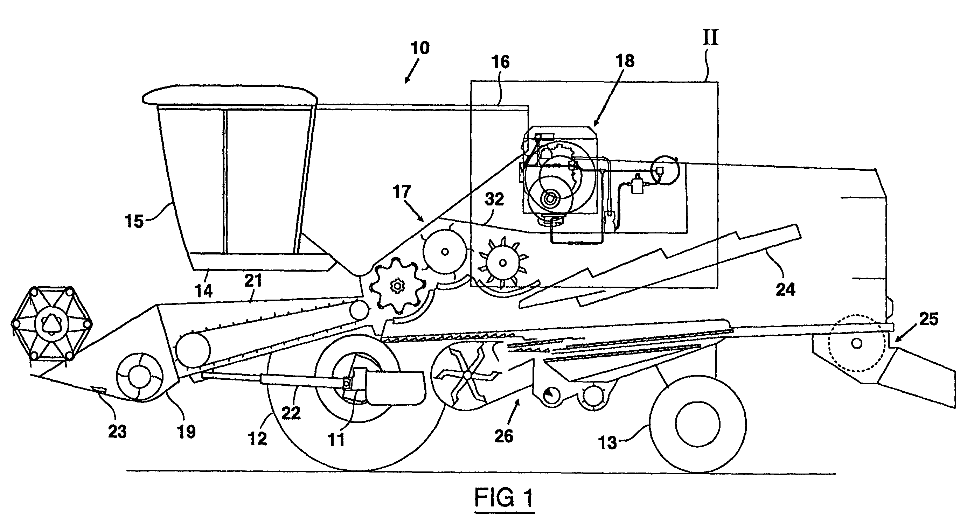

Figure 1 is a diagrammatic side view of the combine harvester embodying the present invention,

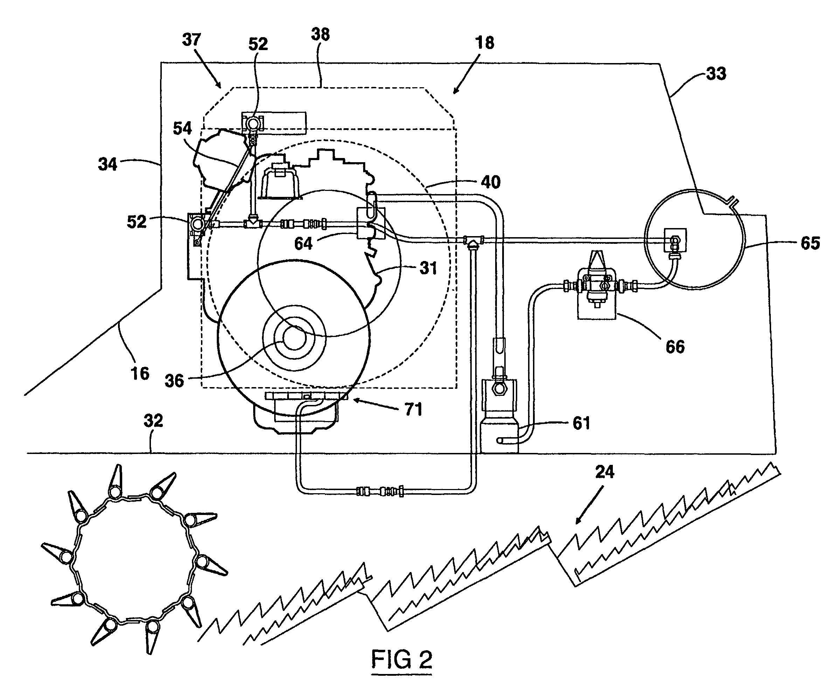

Figure 2 is an enlargement of the portion indicated at II in Figure 1, and

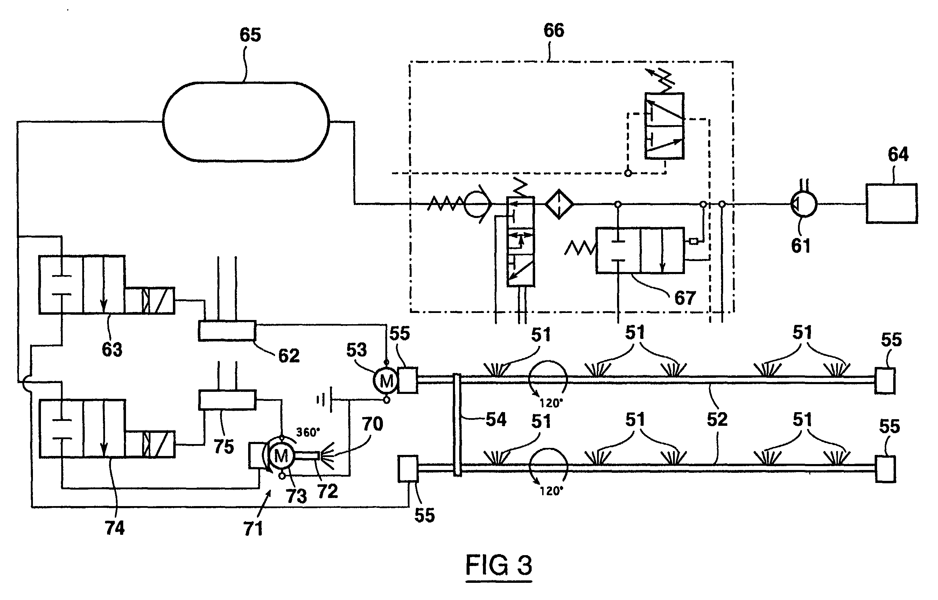

Figure 3 is a schematic representation of the various components of the construction.

The combine harvester 10 comprises a main chassis or frame 11 supported on a front pair of drive wheels 12 and a rear pair of steerable wheels 13. Supported on the main chassis 11 are an operator's platform 14 with operator's cab 15, a grain tank 16, a threshing and separating mechanism 17 and a power plant 18. A conventional header 19 and straw elevator 21 extend forwardly of the main chassis 11 and the header 19 is pivotally secured to the chassis 11 for generally vertical movement which is controlled by extensible hydraulic cylinders 22.

As the combine harvester 10 is propelled forwardly over a field with standing crop, the latter is severed from the stubble by a sickle bar 23 on the header 19, whereafter the header 19 and straw elevator 21 supply the cut crop to the threshing and separating mechanism 17. The crop received therein is threshed and separated, that is to say, the crop is rubbed and beaten, whereby the grain, seed or the like, is loosened and separated from the straw, coils or other discardable part of the crop.

The discardable crop material issuing from the separating mechanism 24 (mainly straw) is discharged from the machine in one of two ways. In one mode of operation, the straw is discharged in a central windrow and in an alternative mode of operation, the straw issuing from the separator means 24 flows to straw chopper means 25. The straw chopper means 25 are rotary devices adapted to chop the straw and to propel chopped straw through discharge outlets which are inclined downwardly and flare outwardly and are effective to spread the chopped straw across the full width of the machine and beyond.

It will be appreciated that the discharging of the straw in any one of the two ways described generates a lot of dust and fine crop parts which become airborne and which contaminate the environment in which the combine 10 has to operate. This may be particularly critical in case the harvester 10 is set to chop the straw.

Turning now to the cleaning operation, grain which has been separated from the straw falls onto the grain cleaning mechanism 26 which comprises means to separate chaff and other impurities from the grain, and means to separate unthreshed parts, known as tailings. Cleaned grain is then elevated into the grain tank 16 and the tailings are reprocessed in separate tailings rethreshers and returned to the cleaning mechanism 26 for repeated cleaning action.

Chaff and other impurities thus separated from the grain in the cleaning mechanism 26 are made airborne and discharged from the machine at the rear thereof. It again will be appreciated that this equally is an important source of contamination of the environment in which the combine harvester 10 has to operate.

Another major source of contamination is the header 19, the operation of which also causes lots of dust, chaff and other impurities to become airborne around the harvester 10.

This contamination of the harvester environment with dust, chaff, fine straw particles and other impurities creates a fire hazard when these impurities come into the vicinity of or in contact with the engine 31 of the combine harvester 10. This is particularly true because combine harvesting preferably is done only when the crop to be harvested is both ripe and very dry and the problem created by this fire hazard is critical in as much as not only the machine may be put on fire thereby but also the crop field in which the machine is operating, may catch fire in case chaff and straw particles, which caught fire because of contact with hot surfaces of the engine 31, fall onto the stubble and/or the crop standing on the field.

It is the objective of the present invention to obviate or at least reduce to the greatest possible extent, this fire hazard.

Considering the power plant 18 of the combine harvester 10, it is installed generally at the top of the rear half of this combine harvester 10 i.e. on top of the top wall 32 of the harvester main body, generally rearwardly of the grain tank 16 and generally above the discharge area of the separator means 24. As is conventional, the power plant 18 is surrounded by generally upright shielding walls 33 which extend generally fore-and-aft at the outer transverse sides of the machine. Further, the grain tank rear wall 34 forms a transverse wall adjacent which the power plant 18 is installed. A further shielding (not shown) may extend overtop and downwardly at the transverse side of the power plant 18 opposite to the grain tank 16. The top wall 32 of the harvester main body, the grain tank rear wall 34 and the further shielding extending both overtop of the power plant 18 and adjacent the rear transverse side thereof (if installed) effectively form a funnel shaped enclosure for the power plant 18.

As is conventional, the power plant 18 comprises an internal combustion engine 31 which is positioned generally transversely and has its output shaft 36 with the main cluster of drive pulleys thereon disposed beyond one side edge of the harvester main body but still within the side shieldings 33. Depending on the size of the combine harvester, the engine may have a power rating in the range of 100 to 300 hp or even more and it will be appreciated that, during operation, such a power source generates a lot of heat.

The power plant 18 further also comprises a cooling apparatus 37 which preferably, though not always, is arranged in line with the engine 31 at the side thereof opposite to the side where the output shaft 36 with the drive pulleys is provided. This cooling apparatus 37 mainly consist of three parts i.e. a radiator 38, a cooling fan (not shown) and a rotary air filter or screen 40; said screen 40 extending beyond the side shield 33.

The radiator 38 is disposed adjacent the engine 31 and the rotary air screen 40 is provided at the side of the radiator 38 facing away from the engine 31. The cooling fan is installed generally between the rotary air screen 40 and the radiator 38 and is arranged to draw cooling air from the surrounding atmosphere through the rotary air screen 40 and urge this cooling air through the radiator 38 for cooling engine coolant therein. Used cooling air further also is urged to flow past the engine 31 for further cooling the latter and keeping the vicinity thereof relatively clear of any debris such as chaff, dust, straw particles etc. which otherwise may catch fire when exposed to the engine heat.

Further details of the cooling apparatus are disclosed in GB-A-1.387.690 and GB-A-1.580.452 to which reference is made.

While the purpose of the rotary air screen 40 is to filter the cooling air prior to passing through the radiator 38 and in the vicinity of the engine 31, it will be appreciated that small airborne inflammable particles nevertheless get through the rotary air screen 40 and the radiator 38 into the vicinity of the engine 31.

However, inflammable particles that are airborne also may reach the engine compartment from the surroundings without passing through the rotary air screen 40 and the radiator 38. When exposed to the engine heat or when blown onto hot engine parts, these particles get scorched or parched and, if these particles ultimately drop onto the crop standing on the field and/or onto the stubble, this may start a fire. A fire also may be started when these scorched particles drop onto accumulated dirt on the machine.

According to the invention, these risks are greatly reduced if not fully obviated by providing pressurized air jets 51 which are directed at particularly critical points of the engine 31. Preferably, these air jets 51 are intermittent and furthermore are angularly movable.

This measure can be applied individually or in combination with the encasing of the engine 31 in a funnel shaped structure as already discussed above. These measures aim, on the one hand, at preventing, to the extent possible, that inflammable particles can reach or come anywhere near hot engine parts and, on the other hand, at preventing the accumulation of inflammable dirt in the vicinity of or on the engine.

To accomplish the first aspect of this objective, one or more tubings 52 are installed in the immediate vicinity of the engine 31. These tubings 52 may be either straight (as shown) or bent (not shown) and/or have one or more branches (not shown) so as to extend in the immediate vicinity of critical parts of the engine 31, such as e.g. the exhaust collector and the turbocharger. These tubings 52 are provided with outlets or nozzles oriented at critical engine parts. Furthermore, the tubings 52 are mounted in bearing supports 55 for oscillatory movement in the vicinity of the engine 31. Motor means 53 are provided for, eventually via the intermediary of linkage means 54, oscillating the tubings 52 around e.g. axes extending generally parallel to the longitudinal axis of the engine 31. The angle of oscillation may e.g. be in the range of 120°.

Air compressor means 61 are provided for supplying pressurized air to the tubings 52. The compressor means 61 take the air intake from the air filter means 64 and supply the pressurized air via a valve unit 66 including a pressure limit valve 67 to an air receiver or pressure vessel 65.

Preferably, the pressurized air is supplied intermittently to the tubings 52. In a preferred embodiment, the system is pressurized during 1-2 seconds per minute. To this end, a timer 62 and an appropriate valve 63 are included in the system.

Similarly, the tubings 52 are also oscillated intermittently in synchronism with the pressurization. Accordingly, the timer 62 additionally also controls the energisation of the motor means 53 for oscillating the tubings 52.

In case more than one set of tubings 52 is provided, these tubings 52 may be energised and oscillated either in synchronism to each other or alternately.

During operation, the cooling air issuing from the radiator 38 forcefully flows around the engine 31 thus greatly reducing the risks for the engine area to become contaminated with inflammable particles which are present in the surrounding atmosphere. Moreover, improved engine cooling additionally is obtained.

Nevertheless, some contamination of the engine area with dirt, especially with fine dirt particles, still occurs. Such dirt particles tend to adhere to certain hot parts of the engine 31 where they get scorched and form a fire hazard. However, with the arrangement according to the present invention, forceful jets 51 of pressurized air are directed intermittently on these critical parts whereby any dirt which tends to accumulate thereon is immediately made airborne and subsequently discharged from the engine area by the powerful cooling airstream flowing around the engine.

An advantage of the oscillating movement of the tubings 52 is that larger areas of the critical engine parts are covered by the air jets 51 than would be the case when using stationary tubings. An advantage of the shaped tubings and branches thereof is that the air nozzles can be positioned very closely to the critical engine parts. The intermittent pressurization permits the provision of a relatively small and inexpensive compressor system while maintaining sufficient pressure in the system for guaranteeing sufficiently powerful air jets 51 for efficiently removing any scorched particles from the hot engine parts. In a preferred embodiment, the working pressure in the pressure vessel 65 of the compressor system is in the range of 10-12 bar. This pressure should not drop below 5-6 bar when the air jets are directed onto the engine as otherwise, the capacity for removing dirt could become insufficient.

Turning now to another aspect of the invention, means 71 have been provided for additionally directing an air blast across at least one other machine part in the proximity of the engine 31 to prevent accumulation of inflammable material thereon. This at least one other machine part preferably is the engine service platform 32 and the additional air blast means 71 are operable to create a forceful air blast closely above the surface of the service platform 32 so as to avoid any light and inflammable dirt to settle thereon.

This additional measure for clearing the engine platform 32 of any dirt may be in the form of an oscillating or rotating blast pipe 72 which is equally coupled to the air compressor system and which is intermittently supplied with pressurized air while intermittently being oscillated, respectively rotated in a plane extending generally parallel to and closely above the engine platform 32 for removing any dirt therefrom which otherwise would tend to accumulate thereon. To this end, a further motor means 73 is provided for either oscillating or rotating the blast pipe 72. A valve 74 similar to valve 63 and a timer 75 similar to the timer 62 also are provided. The timer 75 is operable to control the energization of the motor means 73 to intermittently rotate or oscillate the blast pipe 72 on the one hand and to control the valve 74 on the other hand for intermittently supplying pressurized air to the blast pipe 72 in synchronism with its energization.

This additional system may be operated either in synchronism or preferably in alternation with the above described system. In a preferred embodiment, this additional system is operated, i.e. pressurized and oscillated respectively rotated, during about 3 seconds per two minutes. In case an oscillating blast pipe 72 is provided, it may be installed generally to one side of the engine 31 and its oscillatory movement may cover about 180° thus wiping the entire surface of the platform 32 beneath the engine 31. The same result can be accomplished with a rotating blast pipe 72 positioned generally at the middle of the engine service platform 32.

In any event, discharge slits (not shown) are provided in the surrounding shieldings generally at the level of the service platform 32 to allow the airblast and dirt to exit the engine compartment therethrough.

The measures described so far can be applied either independently or in combination with yet another measure to be described hereafter. According to this further measure, the engine 31 is encased in a funnel shaped structure mainly consisting of a rear wall, a front wall, a top wall and a portion of the main frame top wall 32 forming the bottom wall of this structure. All of these walls extend generally from within the vicinity of the radiator 38 to an outlet in the vicinity of the power take off pulleys.

While in the preferred embodiment described above, the engine 31 and the cooling apparatus 37 extend in line with respect to each other, it is very well conceivable that the cooling apparatus 37 is placed out of line with the engine 31. Indeed, this apparatus 37 including the radiator 38, the fan and the rotary air screen 40 may be mounted on the engine service platform 32 at a location rearwardly and to one side of the engine 31. In this case, the radiator 38 may be placed at an angle relative to the axis of the engine 31 so as still to direct the cooling air flow issuing from the radiator 38 towards and around the engine 31.

## Claims

1. A power driven agricultural machine (10) for use in surroundings contaminated with inflammable debris, e.g. chaff, straw particles, dust, etc, and comprising an internal combustion engine (31) for providing motive power to the machine and/or energizing machine parts thereof and air blast means (52, 72) connected to a source of pressurized air (61, 65) and provided with at least one nozzle for directing at least one air jet (51, 70) at or across at least one critical engine part and/or machine part adjacent the engine (31);
said machine being **characterized in that** said air blast means (52, 72) are mounted for angular movement.

2. An agricultural machine according to claim 1, **characterized in that** the air blast means (52, 72) are intermittently movable.

3. An agricultural machine according to claim 1 or 2, **characterized in that** the air blast means (52, 72) are intermittently pressurized.

4. An agricultural machine according to claim 2 when appended to claim 3, **characterized in that** the air blast means (52, 72) are intermittently driven in synchronism with the intermittent pressurization thereof.

5. An agricultural machine according to any of the preceding claims, **characterized in that** the air blast means comprise tubing means (52) with at least one nozzle; the tubing means (52) being mounted for oscillatory movement adjacent a critical engine part so that, during operation, the air jet (51) issuing from the at least one nozzle 'wipes' across said critical part.

6. An agricultural machine according to claim 5, **characterized in that** the tubing means (52) are straight or bent and/or have one or more branches so as to extend in the immediate vicinity of critical engine parts and are disposed to oscillate around axes extending generally parallel to the longitudinal axis of the engine (31).

7. An agricultural machine according to any of the preceding claims, **characterized in that** the air blast means comprise an oscillatory or rotatable blast pipe means (72) disposed to direct an air blast (70) closely above the surface of a machine part (32) adjacent the engine (31).

8. An agricultural machine according to claim 7, **characterized in that** said machine part adjacent the engine (31) is an engine service platform (32).

9. An agricultural machine according to any of the preceding claims, **characterized in that** the source of pressurized air comprises an air compressor means (61) coupled via valve means (63, 74) to the air blast means (52, 72).

10. An agricultural machine according to any of the preceding claims, **characterized in that** motor means (53, 73) are provided for driving the air blast means (52, 72).

11. An agricultural machine according to claim 10 when appended to claim 5 or 6, **characterized in that** the tubing means comprise two or more oscillatory tubings (52); that motor means (53) are drivingly coupled with one tubing (52) for oscillating the same and that linkage means (54) are provided between the respective tubings (52) for oscillating all tubings (52) in synchronism.

12. An agricultural machine according to any of the claims 5, 6 or 11, **characterized in that** the tubing means (52) are disposed to oscillate through an arc of 120°.

13. An agricultural machine according to claim 10 when appended to claim 9, **characterized in that** timer means (62, 75) are associated with the valve means (63, 74) for intermittently pressurizing the air blast means (52, 72) and with the motor means (53, 73) for intermittently driving the same in synchronisation with the pressurization thereof.

14. An agricultural machine according to any of the preceding claims, **characterized in that** the engine (31) is encased in a funnel shaped structure extending generally from an inlet within the vicinity of a cooling apparatus (37) including a radiator (38) and a fan to an outlet within the vicinity of the engine power take off (36).

## Patentansprüche

1. Kraftgetriebene landwirtschaftliche Maschine (10) zur Verwendung in Umgebungen, die mit entflammbaren Abfällen, wie z. B. Spreu, Strohteilchen, Staub usw. verunreinigt sind, wobei die Maschine einen Verbrennungsmotor (31) zur Lieferung der Antriebsleistung an die Maschine und/oder zum Antrieb von Maschinenteilen hiervon und Luftblaseinrichtungen (52, 72) umfasst, die mit einer Druckluftquelle (61, 65) verbunden und mit zumindest einer Düse versehen sind, um zumindest einen Luftstrahl (51, 70) auf oder über zumindest einen kritischen Motorteil und/oder Maschinenteil benachbart zu dem Motor (31) zu lenken;
wobei die Maschine **dadurch gekennzeichnet ist, dass** die Luftblaseinrichtungen (52, 72) für eine Winkelbewegung befestigt sind.

2. Landwirtschaftliche Maschine nach Anspruch 1, **dadurch gekennzeichnet, dass** die Luftblaseinrichtungen (52, 72) intermittierend beweglich sind.

3. Landwirtschaftliche Maschine nach Anspruch 1 oder 2, **dadurch gekennzeichnet, dass** die Luftblaseinrichtungen (52, 72) intermittierend mit Druck beaufschlagt werden.

4. Landwirtschaftliche Maschine nach Anspruch 2 unter Rückbeziehung auf Anspruch 3, **dadurch gekennzeichnet, dass** die Luftblaseinrichtungen (52, 72) intermittierend synchron mit ihren intermittierenden Druckbeaufschlagungen angetrieben werden.

5. Landwirtschaftliche Maschine nach einem der vorhergehenden Ansprüche, **dadurch gekennzeichnet, dass** die Luftblaseinrichtungen Leitungseinrichtungen (52) mit zumindest einer Düse umfassen, wobei die Leitungseinrichtungen (32) für eine Schwingungsbewegung benachbart zu einem kritischen Motorteil angeordnet sind, so dass im Betrieb der aus der zumindest einen Düse austretende Luftstrahl (51) den kritischen Teil "überstreicht".

6. Landwirtschaftliche Maschine nach Anspruch 5, **dadurch gekennzeichnet, dass** die Leitungseinrichtungen (52) gerade oder gebogen sind und/oder eine oder mehrere Verzweigungen aufweisen, so dass sie sich in die unmittelbare Nähe von kritischen Motorteilen erstrecken und für eine Schwingung um Achsen angeordnet sind, die sich allgemein parallel zur Längsachse des Motors (31) erstrecken.

7. Landwirtschaftliche Maschine nach einem der vorhergehenden Ansprüche, **dadurch gekennzeichnet, dass** die Luftblaseinrichtungen eine in Schwingung versetzbare oder drehbare Blasleitungseinrichtung (72) umfassen, die so angeordnet ist, dass sie einen Luftstoß (70) nahe oberhalb der Oberfläche eines Maschinenteils (32) benachbart zu dem Motor (31) lenkt.

8. Landwirtschaftliche Maschine nach Anspruch 7, **dadurch gekennzeichnet, dass** der Maschinenteil benachbart zu dem Motor (31) eine Motor-Wartungsplattform (32) ist.

9. Landwirtschaftliche Maschine nach einem der vorhergehenden Ansprüche, **dadurch gekennzeichnet, dass** die Druckluftquelle eine Kompressoreinrichtung (61) umfasst, die über Ventileinrichtungen (63, 74) mit den Luftblaseinrichtungen (52, 72) gekoppelt ist.

10. Landwirtschaftliche Maschine nach einem der vorhergehenden Ansprüche, **dadurch gekennzeichnet, dass** Antriebseinrichtungen (53, 73) zum Antrieb der Luftblaseinrichtungen (52, 72) vorgesehen sind.

11. Landwirtschaftliche Maschine nach Anspruch 10 unter Rückbeziehung auf Anspruch 5 oder 6, **dadurch gekennzeichnet, dass** die Leitungseinrichtungen zwei oder mehr schwingende Leitungen (52) umfassen, dass die Antriebseinrichtungen (53) antriebsmäßig mit einer Leitung (52) gekoppelt sind, um diese in Schwingungen zu versetzen, und dass Gestängeeinrichtungen (54) zwischen den jeweiligen Leitungen (52) vorgesehen sind, um alle Leitungen (52) synchron in Schwingungen zu versetzen.

12. Landwirtschaftliche Maschine nach einem der Ansprüche 5, 6 oder 11, **dadurch gekennzeichnet, dass** die Leitungseinrichtungen (52) so angeordnet sind, dass sie über einen Bogen von 120° schwingen.

13. Landwirtschaftliche Maschine nach Anspruch 10 unter Rückbeziehung auf Anspruch 9, **dadurch gekennzeichnet, dass** Zeitgebereinrichtungen (62, 75) den Ventileinrichtungen (63, 74) zur intermittierenden Druckbeaufschlagung der Luftblaseinrichtungen (52, 72) und den Antriebseinrichtungen (53, 73) zum intermittierenden Antrieb dieser Antriebseinrichtungen zum intermittierenden Antrieb der Luftblaseinrichtungen synchron mit deren Druckbeaufschlagung zugeordnet sind.

14. Landwirtschaftliche Maschine nach einem der vorhergehenden Ansprüche, **dadurch gekennzeichnet, dass** der Motor (31) in einer trichterförmigen Struktur eingeschlossen ist, die sich allgemein von einem Einlass in der Nähe einer Kühlvorrichtung (37), die einen Kühler (38) und ein Gebläse einschließt, zu einem Auslass in der Nähe der Motor-Leistungsabgabe (36) erstreckt.

## Revendications

1. Machine agricole (10) motorisée utilisable dans des environnements contaminés par des débris inflammables (par ex. balles, particules de paille, poussière, etc.); la machine comprenant un moteur à combustion interne (31) pour fournir de la force motrice à la machine et/ou mettre en action des pièces de cette machine et des moyens de soufflage d'air (52, 72) raccordés à une source d'air comprimé (61, 65) et équipés d'au moins un éjecteur destiné à diriger au moins un jet d'air (51, 70) sur au moins une pièce critique de moteur et/ou une pièce de machine proche du moteur (31);
**caractérisée en ce que** les moyens de soufflage d'air (52, 72) sont montés avec possibilité de déplacement.

2. Machine agricole selon la revendication 1, **caractérisée en ce que** les moyens de soufflage d'air (52, 72) peuvent être mis en mouvement par intermittence.

3. Machine agricole selon la revendication 1 ou 2, **caractérisée en ce que** les moyens de soufflage d'air (52, 72) sont pressurisés par intermittence.

4. Machine agricole selon la revendication 2 lorsqu'elle se rapporte à la revendication 3, **caractérisée en ce que** les moyens de soufflage d'air (52, 72) sont entraînés par intermittence en synchronisme avec leur pressurisation par intermittence.

5. Machine agricole selon l'une quelconque des revendications précédentes, **caractérisée en ce que** les moyens de soufflage d'air comprennent des moyens de tuyauterie (52) avec au moins un éjecteur; les moyens de tuyauterie (52) étant montés pour pouvoir osciller à proximité d'une pièce critique de moteur de telle sorte qu'en fonctionnement, le jet d'air (51) issu de l'au moins unique éjecteur "balaye" la surface de ladite pièce critique.

6. Machine agricole selon la revendication 5, **caractérisée en ce que** les moyens de tuyauterie (52) sont rectilignes ou cintrés et/ou possèdent un ou plusieurs embranchements de manière à s'étendre à proximité immédiate de pièces critiques de moteur, et sont disposés pour pouvoir osciller autour d'axes s'étendant en général parallèlement à l'axe longitudinal du moteur (31).

7. Machine agricole selon l'une quelconque des revendications précédentes, **caractérisée en ce que** les moyens de soufflage d'air comprennent des moyens de tuyau oscillant ou rotatif de soufflage (72) disposés pour orienter un souffle d'air (70) à courte distance au-dessus de la surface d'une pièce de machine (32) adjacente au moteur (31).

8. Machine agricole selon la revendication 7, **caractérisée en ce que** ladite pièce de machine adjacente du moteur (31) est une plate-forme de service de moteur (32).

9. Machine agricole selon l'une quelconque des revendications précédentes, **caractérisée en ce que** la source d'air comprimé comprend un moyen de compresseur pneumatique (61) raccordé via des moyens de soupapes (63, 74) aux moyens de soufflage d'air (52, 72).

10. Machine agricole selon l'une quelconque des revendications précédentes, **caractérisée en ce que** des moyens de motorisation (53, 73) sont prévus pour entraîner les moyens de soufflage d'air (52, 72).

11. Machine agricole selon la revendication 10 lorsqu'elle se rapporte à la revendication 5 ou 6, **caractérisée en ce que** les moyens de tuyauterie comprennent deux ou plusieurs tuyauteries (52); que les moyens de motorisation (53) sont accouplés fonctionnellement avec une tuyauterie (52) pour mettre cette dernière en oscillation, et que des moyens de liaison (54) sont prévus entre lesdites tuyauteries respectives (52) afin de mettre toutes les tuyauteries en oscillation synchronisée.

12. Machine agricole selon l'une quelconque des revendications 5, 6 ou 11, **caractérisée en ce que** les moyens de tuyauterie (52) sont disposés pour osciller suivant un arc de 120°.

13. Machine agricole selon la revendication 10 lorsqu'elle se rapporte à la revendication 9, **caractérisée en ce que** des moyens de chronomètre (62, 75) sont associés avec les moyens de soupapes (63, 74) pour pressuriser par intermittence les moyens de soufflage d'air (52, 72), et avec des moyens de motorisation (53, 73) pour les entraîner en synchronisme avec leur pressurisation.

14. Machine agricole selon l'une quelconque des revendications précédentes, **caractérisée en ce que** le moteur (31) est intégré dans une structure en forme de canal s'étendant généralement depuis une entrée à proximité d'un dispositif de refroidissement (37) comprenant un radiateur (38) et un ventilateur, jusqu'à une sortie à proximité de la prise de force de moteur (36).
